# EUROPÄISCHE PATENTANMELDUNG

(11) **EP 4 382 361 A1**
(43) Veröffentlichungstag der Anmeldung: **12.06.2024**
(21) Anmeldenummer: 23215340.3
(22) Anmeldetag: 08.12.2023
(51) Int. Cl.: B60P 7/13

(54) **TRANSPORTSICHERUNG FÜR ABROLLBEHÄLTER AUF LASTENTRANSPORTFAHRZEUGEN UND LASTENTRANSPORTFAHRZEUG MIT TRANSPORTSICHERUNG**

(30) Priorität: 09.12.2022 DE 102022132865
(71) Anmelder: Hüffermann Transportsysteme GmbH, 16845 Neustadt/Dosse (DE)
(72) Erfinder: REUTER, Henry, 14612 Falkensee (DE)
(74) Vertreter: Eisenführ Speiser

(57) **Zusammenfassung**

Die Erfindung betrifft eine Transportsicherung (10) für Wechselbehälter auf einem Lastentransportfahrzeug mit zumindest teilweiser kraftschlüssiger Wirkung. Die Transportsicherung besitzt wenigstens eine Verriegelungsklaue (24), die über eine Kinematik (40) mit einem Antrieb (30) derart verbunden ist, dass die Verriegelungsklaue (24) mittels des Antriebs (30) und der Kinematik (40) von einer freigegebenen Position in eine verriegelnde Position und umgekehrt verlagerbar ist. Ein freies Ende der Verriegelungsklaue (24) ist ausgebildet, in der Verriegelungsposition in einen Träger oder eine Ausnehmung an einem Wechselbehälter einzugreifen. Am freien Ende der Verriegelungsklaue (24) ist ein drehbar gelagerter exzentrischer Klemmkörper (22) angeordnet, der über ein freies Ende eines Hakenteils (26) der Verriegelungsklaue hinausragt und dazu ausgebildet ist, in der Verriegelungsposition an einem Untergurt (14.1) eines Trägers (14) oder einem Boden einer Ausnehmung an einem Wechselbehälter anzuliegen.

## Beschreibung

Die Erfindung betrifft ein Lastentransportfahrzeug mit einer Transportsicherung für Wechselbehälter, insbesondere Abrollbehälter oder dergleichen, sowie die Transportsicherung selbst.

Zum Transportieren von Schütt- oder Stückgütern werden vielfach Abrollbehälter als Wechselbehälter eingesetzt. Ein Abrollbehälter weist typischerweise einen kastenförmigen Behälter und einen darunter angeordneten Unterbaurahmen auf. Weitere Bestandteile können ein Rollenpaar, ein Aufnahmebügel an der Behälterstirnseite sowie Türen am Heck sein.

Der Unterbaurahmen kann anstelle des Behälterkastens auch mit anderen Aufbauten versehen sein. Zum Beladen eines Lastentransportfahrzeugs mit einem Abrollbehälter kann ein spezielles Ladegerät vorgesehen sein. Lastentransportfahrzeuge mit eigenem Ladegerät werden dazu genutzt, sich selbst zu beladen und sind dazu geeignet, darauf abgestimmte andere Lastentransportfahrzeuge ohne Ladeeinrichtung mit Behältern zu bestücken.

Der im Folgenden verwendete Begriff "Lastentransportfahrzeug" umfasst Zugfahrzeuge und Anhängefahrzeuge sowohl mit als auch ohne eigenes Ladegerät.

Um während des Straßentransportes das Verrutschen oder Herunterfallen der tonnenschweren Abrollbehälter zu verhindern, kommen verschiedene Sicherungsmaßnahmen zum Einsatz. Dazu gehören zum Beispiel feste und steckbare Anschläge, wie sie in den Zeichnungen des Gebrauchsmusters DE 20 2010 013 687 abgebildet sind.

Die am häufigsten verwendete Sicherungsart für Abrollbehälter und andere Wechselaufbauten mit Unterrahmen sind Verriegelungen. Bekannte Wechselaufbauten mit Unterrahmen sind beispielsweise Abrollpressen, ACTS System Wechselbehälter für den Bahntransport, Seilbehälter, MSTS Behälter, Behälter nach schwedischer, finnischer Norm oder japanischer Norm etc., Derartige Wechselaufbauten besitzen einen Unterrahmen der Längsträger aufweist und der mit einer Verriegelung gesichert werden kann. Verriegelungen spannen mittels Verriegelungsklauen die Längsträgeruntergurte des Abrollbehälter-Unterbaurahmens auf den Aufstandsflächen des Fahrgestells nieder. Die Spannbewegung und gegebenenfalls auch eine Kraftübersetzung kann durch unterschiedliche kinematische Systeme verwirklicht werden. Entsprechende Transportsicherungen sind in DE 44 12 085, DE 20 2013 005 442 oder WO 2005/035306 gezeigt und beschrieben.

Für die Betätigung einer Transportsicherung werden in der Regel pneumatische Systeme verwendet, bei denen die Druckluft durch die bei Nutzfahrzeugen übliche pneumatische Bremsanlage zur Verfügung gestellt wird. Hydraulische Betätigungen, die durch den Zugfahrzeugmotor, durch Elektromotoren oder Luft-hydraulische Systeme angetrieben werden, liefern höhere Spannkräfte als rein pneumatische Ausführungen, sind jedoch aufwendiger und kostenintensiver; das gleiche gilt auch für elektrische Stellmotoren mit Spindelantrieben.

Die Spannkräfte kraftschlüssiger Transportsicherungen (auch Ladegutsicherungen genannt) sind insbesondere bei pneumatischer Betätigung durch den zur Verfügung stehenden Druck und die durch die Platzverhältnisse eingeschränkte Zylindergröße begrenzt. Auch durch neue kinematische Systeme konnten in der Vergangenheit die Spannkräfte nicht wesentlich vergrößert werden. Eine immer noch aktuelle Kinematik ist in DE 44 12 085 beschrieben.

Die geometrischen Gegebenheiten am Unterbaurahmen verschiedener Abrollbehälter sind jedoch nicht identisch und Lastentransportfahrzeuge werden zum Transportieren unterschiedlicher Wechselbehälter verwendet.

Ziel der Erfindung ist es, die Sicherungseigenschaften von Transportsicherungen für Abrollbehälter unter den gegebenen Bedingungen zu verbessern.

Erfindungsgemäß wird diese Zielstellung entsprechend dem Schutzanspruch 1 mit einer Transportsicherung erreicht, die eine Verriegelungsklaue aufweist, die über eine Kinematik mit einem Antrieb derart verbunden ist, dass die Verrieglungsklaue mittels des Antriebs und der Kinematik von einer freigebenden Position (im Folgenden auch Öffnungsstellung genannt) in eine verriegelnde Position (im Folgenden auch Verriegelungsposition genannt) und umgekehrt verlagerbar ist. Dabei ist ein freies Ende der Verriegelungsklaue ausgebildet, in der Verriegelungsposition in einen Träger mit einem Steg und einem Untergurt oder eine Ausnehmung mit einem Boden und einer Rückwand einzugreifen. Am freien Ende der Verriegelungsklaue ist ein drehbar gelagerter exzentrischer Klemmkörper angeordnet, der über ein freies Ende eines Hakenteils der Verriegelungsklaue hinausragt und dazu ausgebildet ist, in der Verriegelungsposition an einem Untergurt eines Trägers oder einem Boden einer Ausnehmung an einem Abrollbehälter anzuliegen.

Vorzugsweise ist die Umfangsfläche des Klemmkörpers mit einer reibkrafterhöhenden und/oder verschleißmindernden Oberfläche oder Beschichtung versehen. Insbesondere eine Oberfläche, die eine große Reibkraft bewirkt, hat in Verbindung mit dem drehbar gelagerten exzentrischen Klemmkörper den Vorteil, dass dessen Umfangsfläche im verriegelten Zustand keine Relativbewegung zu beispielsweise einem Untergurt eines Trägers eines Wechselbehälters mehr ausführen kann, d.h. der Klemmkörper ist im Ergebnis in Rotationsrichtung fixiert, solange die Transportsicherung verriegelt ist.

Zum Erhöhen der Reibkraft kann die Umfangsfläche des Klemmkörpers mit einer strukturierten Oberfläche und/oder einer Anti-Rutsch-Beschichtung versehen sein. Die Anti-Rutsch-Beschichtung kann beispielsweise ein Kunststoffüberzug sein, beispielsweise eine Polyurethan-Beschichtung.

Zum Vermindern des Verschleißes kann die Umfangsfläche des Klemmkörpers mit einer Hartmetallbeschichtung versehen sein. Alternativ kann der Klemmkörper auch zur Gänze oder zu wesentlichen Teilen aus Hartmetall gefertigt sein.

Vorzugsweise ist die Umfangsfläche des Klemmkörpers mit einem reibungserhöhenden Material beschichtet, das in Verbindung mit einem Untergurt aus Stahl Reibbeiwerte größer als 0,25, bevorzugt größer als 0,3 ist. Das reibungserhöhende Material kann aus einem Verbundwerkstoff bestehen, der Oxide, wie Aluminium-, Silizium- und Manganoxide, mineralische Werkstoffe, Carbide oder Phosphide, Fasern aus aromatischen Polyamiden und/oder Kunstharz enthält.

Der exzentrische Klemmkörper besitzt vorzugsweise eine Umfangskontur, die sich in Umfangsrichtung aus stärker gekrümmten und weniger stark gekrümmten Umfangsabschnitten zusammensetzt. Auch dies wirkt zusammen mit der exzentrischen Form und einer reibungserhöhenden Umfangsfläche einem ungewollten Drehen des Klemmkörpers im verriegelten Zustand der Transportsicherung entgegen.

Vorzugsweise ist der exzentrische Klemmkörper zwischen zwei Hakenteilen angeordnet und nahe den feien Enden der Hakenteile drehbar in diesen gelagert. Da die Spannkraft der Verriegelungsklaue über ihren Klemmkörper auf beispielsweise den Untergurt eines Trägers eines Wechselbehälters wirkt, muss der Klemmkörper die gesamte Spannkraft übertragen, durch die mittige Anordnung zwischen zwei Hakenteilen ist die Kraftwirkung symmetrisch. Ein ähnlicher Effekt kann auch erreicht werden, wenn der Klemmkörper zu beiden Seiten eines einzigen, zentralen Hakenteils von diesem absteht. Der Klemmkörper ist in diesem Fall geometrisch zweigeteilt, kann aber gleichwohl einstückig ausgebildet sein.

Vorzugsweise besitzt der exzentrische Klemmkörper einen Durchmesser zwischen 4 cm und 7 cm. Vorzugsweise hat der exzentrische Klemmkörper in Richtung seiner Rotationsachse eine Länge zwischen 3 cm und 6 cm. Die Länge kann in Einzelfällen aber auch 10 cm und mehr betragen.

Die Lagerung des exzentrischen Klemmkörpers an dem Hakenteil sowie die Form und Masseverteilung des exzentrischen Klemmkörpers sind vorzugsweise derart gestaltet, dass der exzentrische Klemmkörper bei Abwesenheit weiterer äußerer Kräfte eine durch die Schwerkraft definierte Rotationsstellung einnimmt, d.h. der exzentrische Klemmkörper kann frei pendeln, wenn er an keiner Oberfläche z.B. eines Behälterrahmens anliegt.

In der verriegelnden Position der Verriegelungsklaue nimmt der exzentrische Klemmkörper vorzugsweise eine von der durch die Schwerkraft definierten Rotationsstellung abweichende Rotationsstellung ein, da sich der exzentrische Klemmkörper beim Spannen der Transportsicherung an die Geometrie beispielsweise eines Behälterrahmens anpasst und diesen im Ergebnis optimal verriegelt.

Die Verriegelungsklaue und die Kinematik sind in Verbindung mit dem exzentrischen Klemmkörper vorzugsweise derart ausgebildet, dass sich die Rotationsstellung des exzentrischen Klemmkörpers in der verriegelnden Position der Verriegelungsklaue verändert, wenn sich die Relativposition zwischen der Transportsicherung und einem von der Transportsicherung gehaltenem Behälter ändert. Das bedeutet, dass der exzentrische Klemmköper beispielsweise mit einem Behälterrahmen mitgehen kann, wenn sich der gehaltene Behälter z.B. in einer Kurvenfahrt seitlich verlagert. Dies erlaubt einen zuverlässigen Halt des Behälters auch bei sich verziehendem Fahrzeugrahmen oder Fahrgestell.

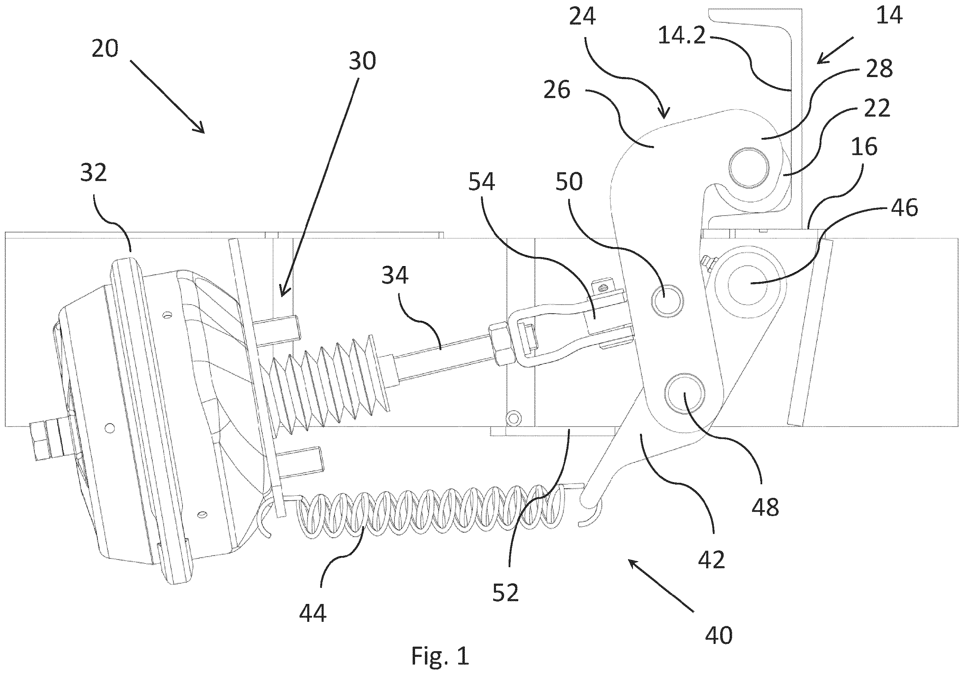

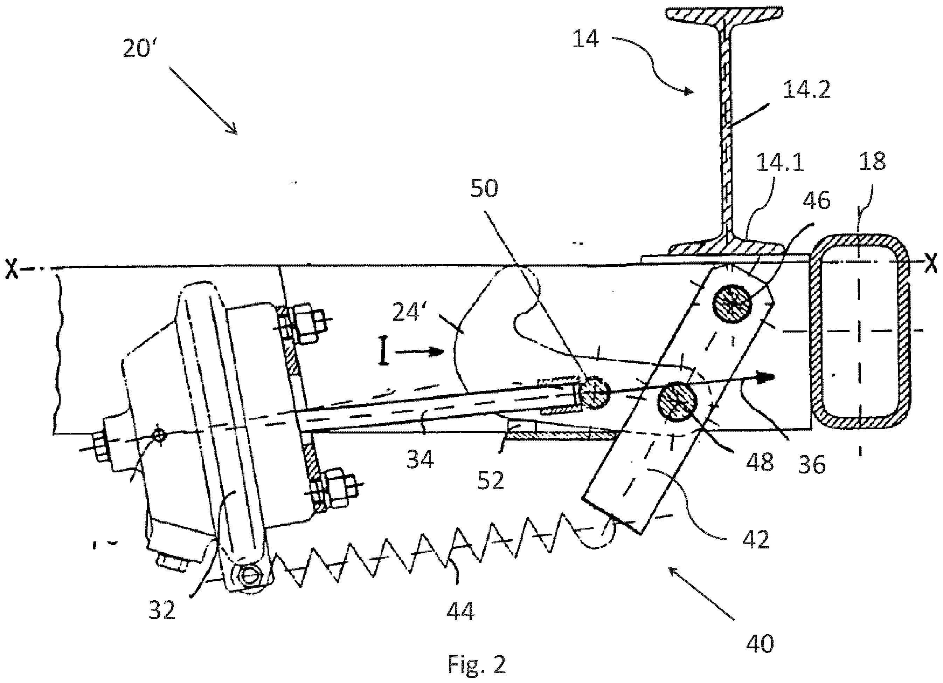

Die Erfindung wird nachfolgend anhand von Ausführungsbeispielen unter Bezugnahme auf die Zeichnungen in den Fig. 1 und Fig. 2 näher erläutert. Es zeigen:
- Fig. 1:: eine Verriegelungseinheit einer Transportsicherung für Wechselbehälter mit einer Verriegelungsklaue, die erfindungsgemäß an ihrem freien Ende einen drehbar gelagerten, exzentrischen Klemmkörper trägt;
- Fig. 2:: eine Verriegelungseinheit einer Transportsicherung gemäß dem Stand der Technik, mit Spannelement, Verriegelungsklaue und Spannhebel in einer Öffnungsstellung;
- Fig. 3:: eine Transportsicherung mit zwei Verrieglungseinheiten gemäß Figur 2, teilweise im Schnitt:
- Fig. 4:: die Verrieglungseinheit aus Figur 2, bei der sich die Verriegelungsklaue in einer Zwischenstellung befindet;
- Fig. 5:: die Verrieglungseinheit aus Figur 2, bei der sich die Verriegelungsklaue in der Verriegelungsposition befindet;
- Fig. 6:: eine Darstellung der Verrieglungseinheit aus Figur 2, die verschiedene Positionen der Verriegelungsklaue bei deren Bewegung von der Öffnungsstellung zur Verriegelungsposition illustriert; und
- Fig. 7:: eine perspektivische Darstellung einer erfindungsgemäßen Verriegelungsklaue mit einem drehbar gelagerten exzentrischen Klemmkörper an ihrem freien Ende;
- Fig. 8:: verschiedene Seitenansichten einer erfindungsgemäßen Verriegelungsklaue mit einem drehbar gelagerten exzentrischen Klemmkörper an ihrem freien Ende;
- Fig. 9:: verschiedene Ansichten eines Klemmkörpers mit Gleitbuchse für eine erfindungsgemäße Verriegelungsklaue; und
- Fig. 10:: verschiedene Ansichten eines Klemmkörpers ohne Gleitbuchse für eine erfindungsgemäße Verriegelungsklaue.

Das Ausführungsbeispiel in der Fig. 1 zeigt eine Verriegelungseinheit 20 einer erfindungsgemäßen Transportsicherung, die als Teil eines Lastentransportfahrzeugs für Abrollbehälter zum Einsatz kommt. Die Figuren 2 bis 6 zeigen eine Transportsicherung 10' gemäß dem Stand der Technik, auf dem die Erfindung aufbaut. Wie der Vergleich der Figuren 1 und 2 zeigt, besitzt die erfindungsgemäße Transportsicherung 10 (Fig. 1) im Unterschied zur herkömmlichen Transportsicherung 10' (Fig. 2) Verrieglungseinheiten 20 mit einem exzentrischen Klemmkörper 22 an einem freien Ende einer Verriegelungsklaue 24.

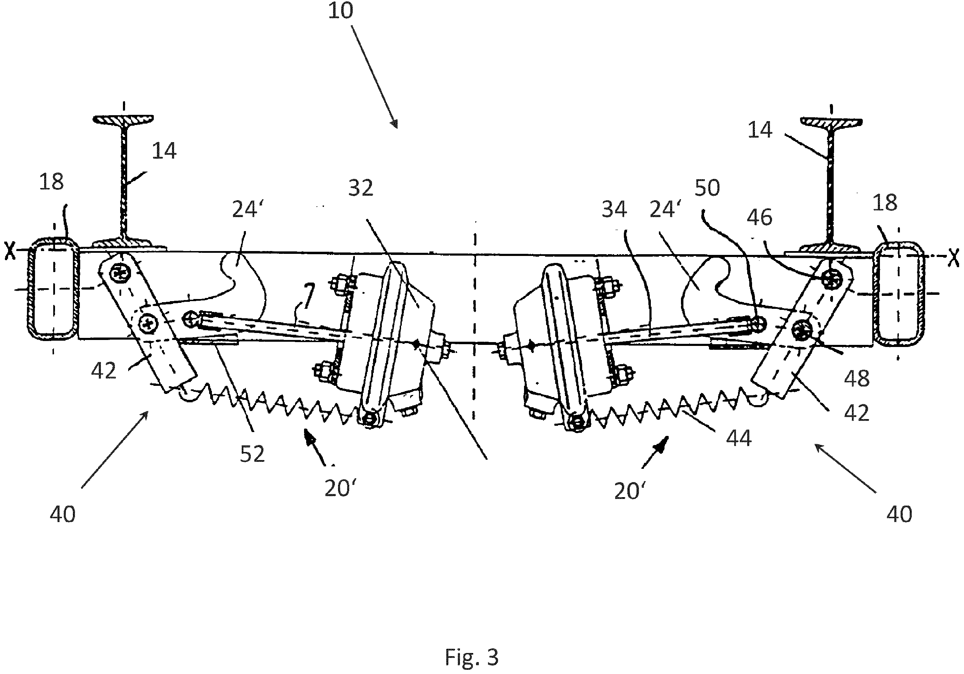

Wie Figur 3 zeigt, besitzt eine Transportsicherung 10' typischerweise zwei Verriegelungseinheiten 20', die einander gegenüberliegend derart an einem Transportfahrzeug angeordnet sind, dass sie zwei Träger 14 eines Unterbaurahmens eines typischen Wechselbehälters jeweils von innen greifen und festzurren können.

In alternativen, hier nicht gezeigten Ausführungsvarianten erfolgt das Greifen und Festzurren von außen, d.h. zwei Träger eines Unterbaurahmens eines typischen Wechselbehälters werden jeweils von außen gegriffen und festgezurrt.

Bei Anhängefahrzeugen für den Transport von Abrollbehältern sind typischerweise zwei Transportsicherungen 10' mit jeweils zwei Verriegelungseinheiten 20 vorgesehen, die mit einem Abstand in Längsrichtung des Lastentransportfahrzeugs angeordnet sind. Es können je nach Länge des Fahrzeugs oder Länge oder Anzahl der zu transportierenden Behälter mehr als zwei Transportsicherungen vorgesehen sein, z.B. drei, vier oder fünf. Verriegelungseinheiten können im Übrigen auch nicht nur zum Sichern eines Unterrahmens eines Abrollbehälters dienen, sondern auch zum Verriegeln eines Schlittens, der bei Transportfahrzeugen zum Transportieren von Abrollbehältern vorgesehen sein kann, um einen Abrollbehälter von der Behälteraufsetzposition an der Heck- oder Stirnseite des Transportfahrzeugs in die Behältertransportposition zu bringen. Entsprechende Transportfahrzeuge besitzen entweder Laufrollenbahnen, auf denen der Abrollbehälter mit seinen Rollen rollen kann, oder sie sind mit einem Schlitten ausgestattet, der den darauf platzierten Abrollbehälter in Fahrzeuglängsrichtung in die Transportposition bewegt.

Wenn ein Lastentransportfahrzeug mit einem Wechselbehälter beladen ist, steht der Wechselbehälter mit den Hauptträgern 14 seines Unterbaurahmens auf rechten und linken Aufstandsflächen 16, die Teil des Fahrgestells 18 des Lastentransportfahrzeuges oder auf diesem montiert sind. Die Aufstandsflächen 16 können eine Verschleißmarkierung besitzen, also eine Markierung, die in Erscheinung tritt, wenn die Oberfläche der Aufstandsflächen 16 abgerieben ist.

Eine jeweilige Verriegelungseinrichtung 20 einer Transportsicherung besitzt jeweils eine Verriegelungsklaue 24 oder 24' mit jeweils einem Hakenteil 26, die mit ihrem Klauenkopf 28 jeweils auf einen Untergurt 14.1 des jeweiligen Hauptträgers 14 eines Behälterunterbaurahmens wirken und diesen auf der Aufstandsfläche 16 niederspannen kann, wodurch die Haltekräfte zur Transportsicherung erzeugt werden. Der Klauenkopf 28 bildet das freie Ende der jeweiligen Verriegelungsklaue 24 und weist einen exzentrischen Klemmkörper 22 auf, der drehbar an dem Hakenteil 26 der Verriegelungsklaue 24 befestigt ist.

Die Spannkraft zum Verriegeln der Verriegelungsklaue 24 wird jeweils durch einen vorzugsweise pneumatischen Linearantrieb 30 erzeugt, der beispielsweise einen Membranzylinder 32 und eine Antriebstange 34 aufweisen kann. Alternativ können aber auch hydraulische Arbeitszylinder oder elektrische Stellmotoren vorgesehen sein.

Eine Kinematik 40 mit einem Spannhebel 42 und einer Zugfeder 44 vergrößert die Spannkraft der jeweiligen Verriegelungsklaue 24. Die Kinematik 40 sorgt weiterhin dafür, dass die Verriegelungsklaue 24 in eine Öffnungsstellung unterhalb der Verriegelungsoberkante geschwenkt werden kann, um zum Beispiel das Überfahren mit einem Schlitten zu ermöglichen oder gegebenenfalls das Lastentransportfahrzeug für andere Güter nutzen zu können.

Erfindungsgemäß ist an dem freien Ende, also dem Klauenkopf 28, der jeweiligen Verriegelungsklaue 24 ein drehbar gelagerte exzentrischer Klemmkörper 22 vorgesehen, der es erlaubt, Wechselbehälter mit Untergurten unterschiedlicher Dicke oder verzogenen Hauptträgern zu sichern, selbst wenn diese vom Standard mehr als 10 mm abweichen.

Die Kraft, mit der die Verriegelungsklaue 24 auf den Untergurt 14.1 des Abrollbehälterunterbaurahmens drückt, wirkt, erhöht durch das anteilige Behältergewicht, auch zwischen dem Untergurt 14.1 und seiner Aufstandsfläche 16 auf dem Fahrgestell 18.

Bei der in Figur 3 dargestellten, typischen Anordnung ist die Transportsicherung 10' unterhalb der Bodenebene X-X von Längsträgern des Fahrgestelles 18 eines Lastentransportfahrzeuges angeordnet. Auf den Aufstandsflächen 16 am Lastentransportfahrzeug ist ein Wechselbehälter mittels der Verriegelungsklauen 24' festsetzbar. Vom Wechselbehälter sind lediglich Längsträger 14 des Unterbaurahmens dargestellt, die von einem Doppel-T-Profil gebildet sind, dessen Stege 14.2 und Untergurte 14.1 am Auflager 16 durch die jeweilige Verriegelungsklaue 24' erfasst und festgespannt werden. Auch Wechselbehälter, deren Unterrahmen keine Längsträger mit Doppel-T-Profil aufweist, sondern z.B. ein U-Profil oder ein Rohrprofil, die für die Verriegelungsklauen nur ausgeschnitten sind, können mit der dargestellte Transportsicherung 10' verriegelt werden.

Nachfolgend wird die aus dem Stand der Technik bekannte Funktionsweise einer Verrieglungseinheit 20' der Transportsicherung 10', insbesondere deren Kinematik 40 am Beispiel einer herkömmlichen Transportsicherung 10' ohne drehbar gelagerte, exzentrische Klemmkörper an den freien Enden der Verriegelungsklauen beschrieben.

Wesentliche Bestandteile der Verrieglungseinheit 20' sind deren Verriegelungsklaue 24' und ein fahrzeugfestgelagerter Spannhebel 42, an dem die Verriegelungsklaue 24' schwenkbar befestigt ist. Ein pneumatischer Linearantrieb 30 - gebildet von einem Pneumatikzylinder 32 und einer Antriebsstange 34 - ist mit der Verriegelungsklaue 24' verbunden. Der Spannhebel 42 ist über eine erste Lagerachse 46 zwischen zwei Aufnahmeträgern schwenkbar am Lastentransportfahrzeug gehalten. Die Verriegelungsklaue 24 ist über eine zweite Lagerachse 48 schwenkbar an dem Spannhebel 42 gelagert und von Aufnahmeträgern außenseitig geführt. Die Antriebsstange 34 ist über eine dritte Lagerachse 50 mit der Verriegelungsklaue 24' schwenkbar verbunden. Der Abstand zwischen der ersten Lagerachse 46 und der zweiten Lagerachse 48 an dem Spannhebel 32 ist größer als der Abstand zwischen der zweiten Lagerachse 48 und der dritten Lagerachse 50 an der Verriegelungsklaue 24'. Auf diese Weise wirkt die von der Antriebstange 32 auf die Verriegelungsklaue 24' und den Spannhebel 32 ausgeübte Kraft entlang einer Kraftwirkungslinie 36, die zwischen der ersten Lagerachse 46 und der zweiten Lagerachse 48 verläuft, wenn sich die Verrieglungsklaue 24' und der Spannhebel 32 in ihrer jeweils vorgesehenen Schwenkposition befinden.

An oder nahe dem freien Ende des Spannhebels 42 ist die Zugfeder 44 befestigt, die annähernd parallel zur Antriebstange 34 verläuft und den Spannhebel 42 in einer ausgeschwenkten Position hält. Auch für die Verriegelungsklaue 24' kann eine Rückzugsfeder vorgesehen sein. Es können auch mehrere Zugfedern vorgesehen sein. Durch die Zugfeder/n) 44 wird die Verriegelungsklaue 24' zunächst über den Träger 14.1 zurück- und anschließend nach unten gezogen.

Wie in Figuren 1 bis 3 dargestellt, liegt die Verriegelungsklaue 24' in der Öffnungsstellung I unterhalb der Bodenebene X-X an einem Anschlagelement 52 an. Die Rückzugsfeder 44 drückt die Verriegelungsklaue 24'gegen die Antriebstange 34, so dass eine fest anliegende Stützverbindung besteht. In dieser Öffnungsstellung I verläuft die Kraftwirkungslinie 36 der Antriebsstange 34 in einem geringen Abstand oberhalb der zweiten Lagerachse 48.

Nach Betätigung des Linearantriebs 30 - im dargestellten Fall handelt es sich um den druckluftbetriebenen Membranzylinder 32 mit der Antriebsstange 34, die schwenkbar in einem Drehpunkt des Membranzylinders 32 gehalten ist, - wird die Antriebsstange 34 in Pfeilrichtung 38 ausgefahren. Anstelle des Pneumatikzylinders kann auch ein Hydraulikzylinder vorgesehen sein. Ebenfalls ist es möglich, dass der Pneumatik- oder Hydraulikzylinder schwenkbar montiert ist, so dass sich die entsprechende Antriebsstange immer in Längsrichtung des jeweiligen Pneumatik- oder Hydraulikzylinders bewegt und nicht schwenkbar mit dem Kolben des Pneumatik- oder Hydraulikzylinders verbunden sein muss.

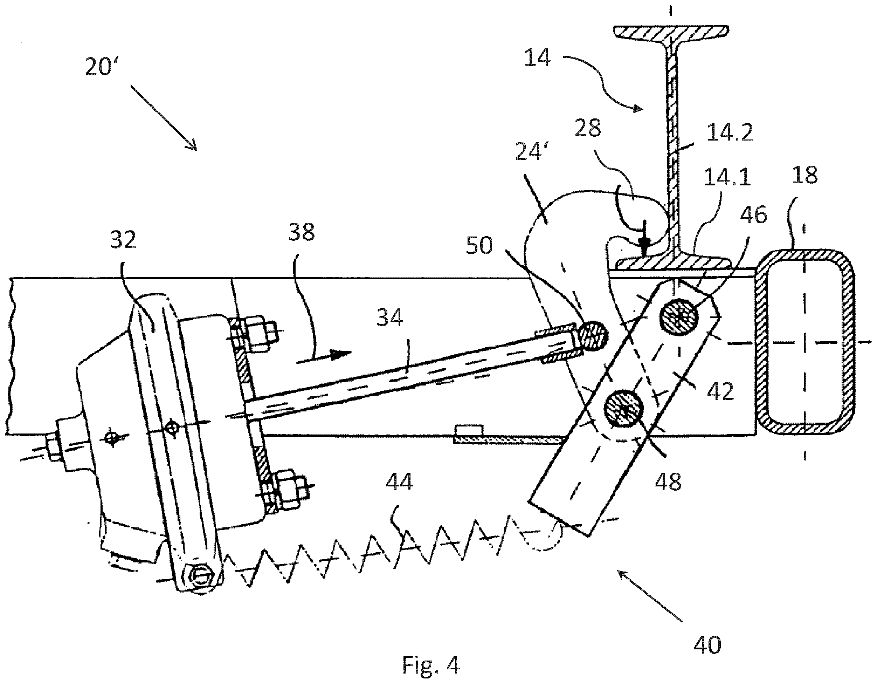

Die Verriegelungsklaue 24' wird durch die Antriebsstange 34 um die zweite Lagerachse 48 in Drehung versetzt. Der Spannhebel 42 verharrt zunächst, gehalten durch die Rückzugsfeder 44, in seiner Ausgangsposition. Über die Antriebsstange 34 wird die Verriegelungsklaue 24' so lange verschwenkt, bis sie gegen den Behälterlängsträger 14 stößt, wie in Fig. 4 gezeigt ist.

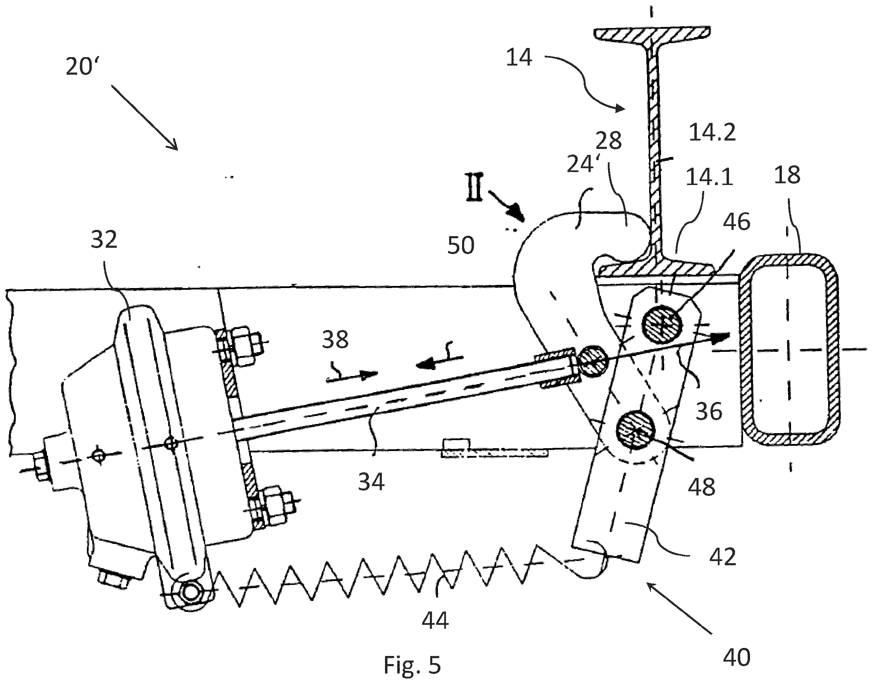

Mit steigender Kraftaufnahme des Spannhebels 42 an der zweiten Lagerachse 48 gibt die Rückzugsfeder 44 nach und der Spannhebel 42 wird in eine Drehbewegung um die erste Lagerachse 46 versetzt. Die Verriegelungsklaue 24' senkt sich und wird an ihrem Ende - an dem sich erfindungsgemäß der drehbar gelagerte, exzentrische Klemmkörper 22 befindet, siehe Figur 1 - von dem Steg 14.2 des Behälterlängsträgers 14 geführt und senkt sich in vertikaler Richtung ab - wie Figuren 4 und 5 zeigen - und spannt den Untergurt 14.1 des Trägers 14 auf der Aufstandsfläche 16 am Fahrgestellrahmen 18 des Lastentransportfahrzeugs fest. In dieser Verriegelungsposition II verläuft die Kraft-Wirkungslinie 36 der Antriebsstange 34 geringfügig unterhalb der ersten Lagerachse 46 des Spannhebels 34.

Wenn am Klauenkopf 28 wie erfindungsgemäß vorgesehen, ein drehbar gelagerter, exzentrischer Klemmkörper 22 angebracht ist, rollt dieser bei der in Figur 4 dargestellten Bewegung der Verriegelungsklaue 24 an dem Steg 14.2 des Trägers 14 solange ab, bis er auf den Untergurt 14.1 des Trägers 14 stößt. Sobald dies - entsprechend der in Figur 5 dargestellten Situation - der Fall ist, verklemmt sich der Klemmkörper 22 zwischen Steg 14.2 und Untergurt 14.1 des Trägers 14. Wegen des Reibschlusses zwischen Klemmkörper 22 und Träger 14 gibt es bei der Abrollbewegung keinen Schlupf und auch keinen Setzvorgang, bei dem sich der Klemmkörper ungewollt verdreht.

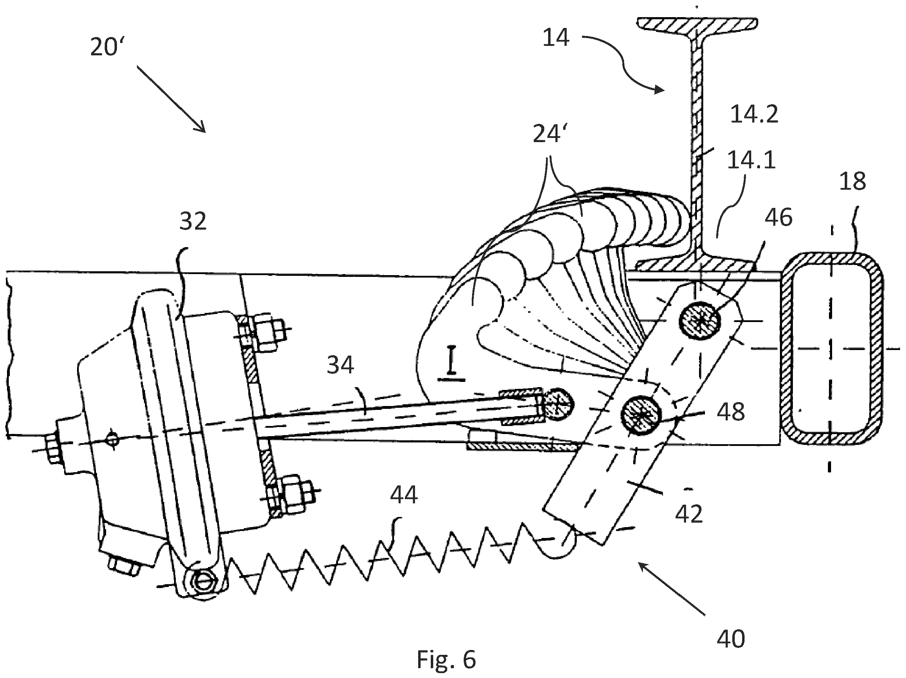

In Fig. 6 ist der Schwenkweg der Verriegelungsklaue 24' von der Öffnungsstellung I bis zur vorbereitenden Verriegelungsposition II dargestellt.

Zum Öffnen der Verriegelung wird die Antriebsstange 34 über durch den Linearantrieb, nämlich den pneumatischen Membranzylinder 32, in Pfeilrichtung 38 verschoben und über die Rückzugsfeder 44 am Spannhebel 42 und an der Verriegelungsklaue 24' nimmt diese wieder ihre Öffnungsstellung I ein, bei der der Membranzylinder 32 drucklos ist und keine Kraft über die Antriebsstange 34 auf die Verriegelungsklaue 24 übertragen werden kann.

Um einem unbeabsichtigten Öffnen der Verriegelung entgegenzuwirken, ist ein zusätzliches Sicherungselement in bekannter Weise der Verriegelungsklaue als Zusatzverriegelung zugeordnet, um bei Druckverlust oder Auftreten von Zusatzkräften eine sichere Halterung zu gewährleisten. Beispielsweise kann von der Seite her ein Bolzen hinter die Verriegelung 24' geschoben werden, um ein Aufgehen der Verriegelung mechanisch zu verhindern.

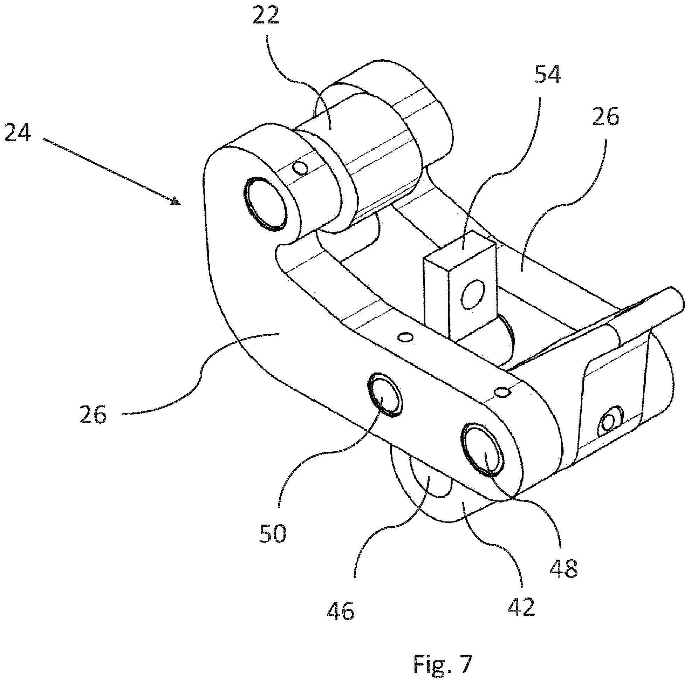

Erfindungsgemäß weist die Verrieglungsklaue 24 an ihrem freien Ende - dem Klauenkopf 28 - einen exzentrischen Klemmkörper 22 auf, der drehbar am freien Ende der Verrieglungsklaue 24 gelagert ist. Dies ist in Figuren 1 und 7 erkennbar.

Die Umfangsfläche des Klemmkörpers 22 ist vorzugsweise mit einer reibkrafterhöhenden und/oder verschleißmindernden Oberfläche oder Beschichtung versehen, z.B. einer strukturierten Hartmetallbeschichtung oder einem Kunststoffüberzug, beispielsweise einer Beschichtung aus Polyurethan.

Beim Spannen der Verriegelungsklaue stößt der exzentrische Klemmkörper 22 auf den Steg 14.2 des Längsträgers 14 oder eine Rückwand einer Ausnehmung und rollt im weiteren Verlauf des Spannvorgangs auf dem Steg 14.2 oder der Rückwand ab, solange bis der Klemmkörper 22 auf den Untergurt 14.1 des Trägers 14 oder den Boden der Ausnehmung stößt - siehe analog auch die Figuren 4 und 5, bei denen zwar kein Klemmkörper gezeigt ist, der am Steg 14.2 abrollt, sondern nur der Klauenkopf 28, der am Steg 14.12 entlang gleitet.

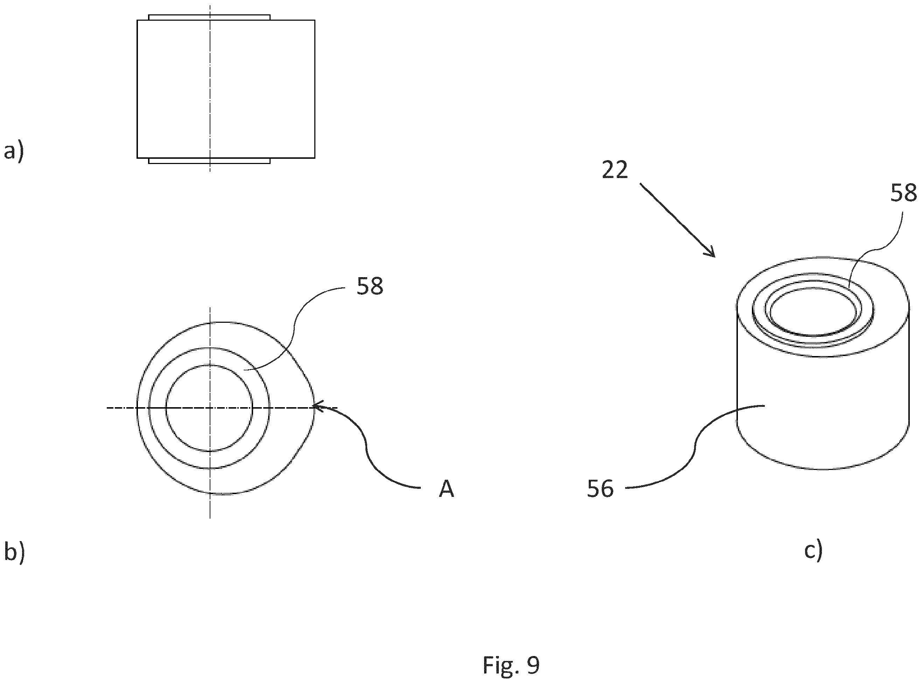

Aufgrund der exzentrischen Form weist derjenige Teil des exzentrischen Klemmkörpers 22, der den größeren Abstand zur Drehachse des Klemmkörpers 22 hat, schließlich in den Winkel zwischen Steg 14.2 und Untergurt 14.1 und verhindert, dass der Klauenkopf 28 der Verriegelungsklaue 24 vom Untergurt 14.1 abrutschen kann. Dabei kann der exzentrische Klemmkörper 22 unterschiedliche Dicken des Untergurts 14.1 ausgleichen, so dass die Klemmwirkung der Transportsicherung bis zu einem gewissen Grad unabhängig von der Dicke des Untergurts oder des Bodens einer entsprechenden Ausnehmung ist. Denn die exzentrische Form des Klemmkörpers 22 bewirkt, dass der Klauenkopf 28 vom Steg 14.2 weggedrückt wird, wenn der Umfangsbereich A (siehe Figur 9) des Klemmkörpers 22, der den größten Abstand zur Rotationsachse des Klemmkörpers 22 hat, am Steg abrollt. Dies wiederum führt dazu, dass der Spannhebel 42 ebenfalls geringfügig geschwenkt wird, so dass sich eine vergrößerte Spannkraft auf den Untergurt 14.2 ergibt.

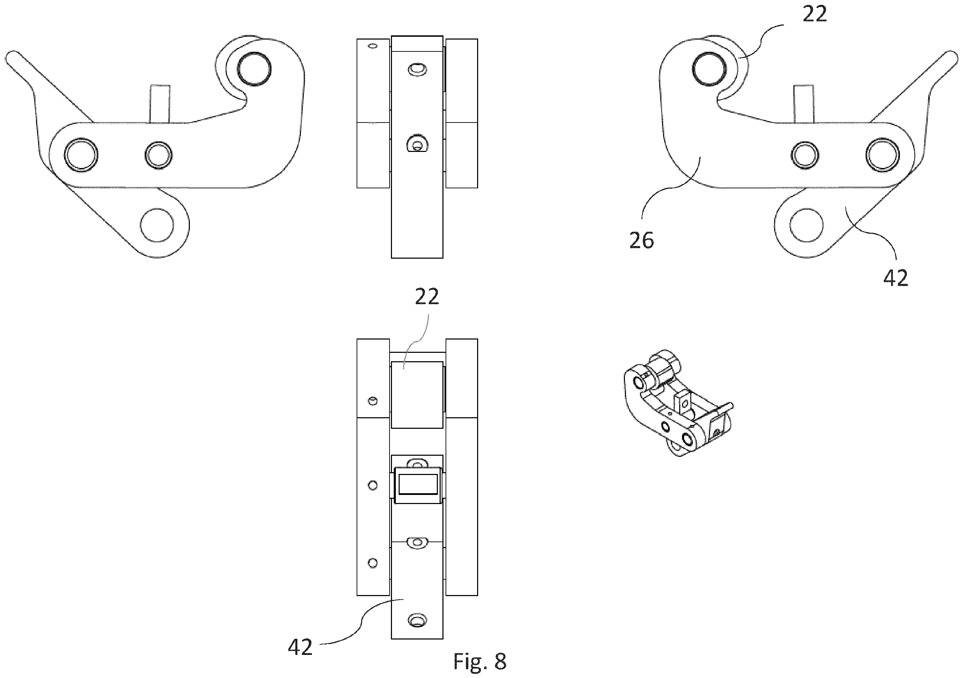

Figuren 7 und 8 illustrieren eine Baugruppe aus Verriegelungsklaue 24 und Spannhebel 42. Figur 7 ist eine perspektivische Darstellung dieser Baugruppe und Figur 8 zeigt die Baugruppe in verschiedenen Seitenansichten.

Der Spannhebel 42 ist ein einzelnes Bauteil, während die Verriegelungsklaue 24 aus zwei Hakenteilen 26, dem drehbar gelagerten, exzentrischen Klemmkörper 22 und einem schwenkbaren Anschlussstück 54 zum Verbinden mit der Antriebsstange 34 zusammengesetzt ist. Der Spannhebel 42, das schwenkbare Anschlussstück 54 und der drehbar gelagerte, exzentrische Klemmkörper 22 sind zwischen den beiden Hakenteilen angeordnet und über die jeweiligen Drehachsen 46, 48 und 50 schwenk- oder drehbar mit den beiden Hakenteilen 26 verbunden.

Auf seiner Umfangsfläche weist der Klemmkörper 22 eine reibkrafterhöhende und verschleißmindernde Schicht aus Hartmetall auf. Diese ist zum Erhöhen der Reibung entsprechend strukturiert.

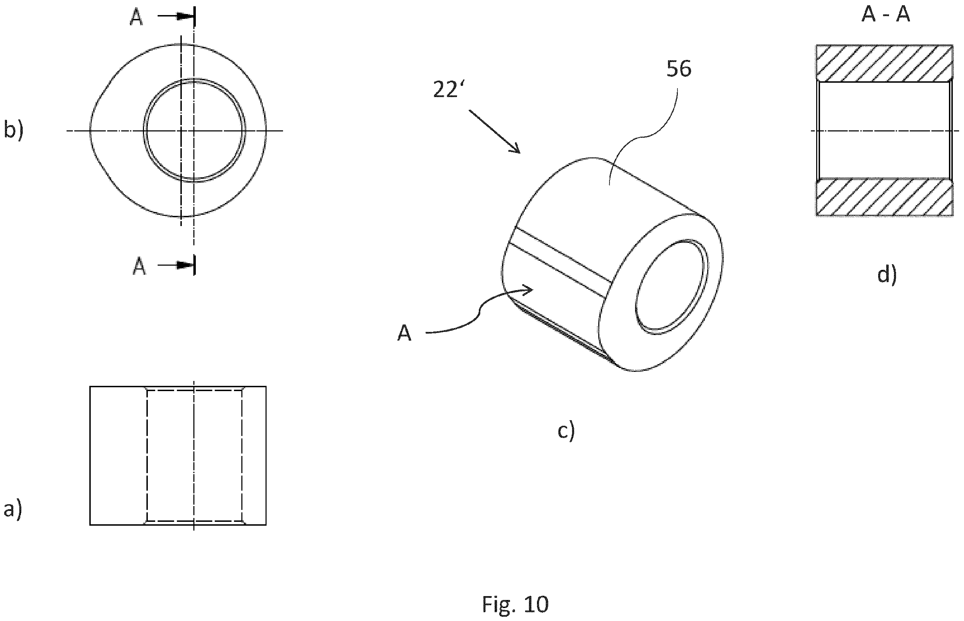

Figur 9 zeigt einen Klemmkörper 22 mit Gleitbuchse 58 und Figur 10 zeig einen Klemmkörper 22' ohne Gleitbuchse jeweils in verschiedenen Ansichten. Figur 9a ist eine Seitenansicht und Figur 9b eine Aufsicht, während Figur 9c eine perspektivische Darstellung ist.

Bei A hat die Umfangsfläche 56 des Klemmkörpers 22 einen größeren Abstand von dessen Rotationsachse, als in den übrigen Umfangsbereichen. Entsprechend ist Figur 10a ist eine Seitenansicht, Figur 10b eine Aufsicht und Figur 10c eine perspektivische Darstellung des Klemmkörpers 22'. Figur 10 d) ist ein Längsschnitt durch den Klemmkörper 22'. In alternativen, nicht dargestellten Ausführungsformen kann der Klemmkörper rund sein, eine Tropfenform besitzen oder eine Form mit verschiedenen Flächen haben.

Die Umfangsfläche 56 des Klemmkörpers 22 ist wie weiter vorne beschrieben mit einer reibungserhöhenden Schicht versehen und oder strukturiert. Die reibungserhöhende Schicht kann aus einem Verbundwerkstoff bestehen, der Oxide, wie Aluminium-, Silizium- und Manganoxide, mineralische Werkstoffe, Carbide oder Phosphide, Fasern aus aromatischen Polyamiden und/oder Kunstharz enthält, aber auch von einer Kunststoffschicht, z.B. auch Polyurethan gebildet sein.

### Bezugszeichenliste

- 10, 10': Transportsicherung
- 14: Träger
- 14.1: Untergurt
- 14.2: Steg
- 16: Aufstandsfläche
- 18: Fahrgestell, Fahrgestellrahmen
- 20, 20': Verriegelungseinheit
- 22: Klemmkörper
- 24, 24': Verriegelungsklaue
- 26: Hakenteil
- 28: Klauenkopf
- 30: Linearantrieb
- 32: Membranzylinder
- 34: Antriebstange
- 36: Kraftwirkungslinie
- 38: Ausfahrrichtung der Antriebstange
- 40: Kinematik
- 42: Spannhebel
- 44: Zugfeder, Rückzugfeder
- 46: erste Lagerachse
- 48: zweite Lagerachse
- 50: dritte Lagerachse
- 52: Anschlagelement
- 54: schwenkbares Anschlussstück für die Antriebsstange
- 56: Umfangsfläche des Klemmkörpers
- 58: Gleitbuchse
- I: entriegelte Position der Verriegelungsklaue
- II: verriegelnde Position der Verriegelungsklaue

## Patentansprüche

1. Transportsicherung (10) für Wechselbehälter auf einem Lastentransportfahrzeug mit zumindest teilweiser kraftschlüssiger Wirkung, mit wenigstens einer Verriegelungsklaue (24), die über eine Kinematik (40) mit einem Antrieb (30) derart verbunden ist, dass die Verriegelungsklaue (24) mittels des Antriebs (30) und der Kinematik (40) von einer freigegeben Position in eine verriegelnde Position und umgekehrt verlagerbar ist, wobei ein freies Ende der Verriegelungsklaue (24) ausgebildet ist, in der Verriegelungsposition in einen Träger oder eine Ausnehmung an einem Wechselbehälter einzugreifen,
**dadurch gekennzeichnet, dass** am freien Ende der Verriegelungsklaue (24) ein drehbar gelagerter exzentrischer Klemmkörper (22) angeordnet ist, der über ein freies Ende eines Hakenteils (26) der Verriegelungsklaue hinausragt und dazu ausgebildet ist, in der Verriegelungsposition an einem Untergurt (14.1) eines Trägers (14) oder einem Boden einer Ausnehmung an einem Wechselbehälter anzuliegen.

2. Transportsicherung gemäß Anspruch 1, **dadurch gekennzeichnet, dass** die Umfangsfläche des Klemmkörpers (22) mit einer reibkrafterhöhenden und/oder verschleißmindernden Oberfläche oder Beschichtung versehen ist.

3. Transportsicherung gemäß Anspruch 2, **dadurch gekennzeichnet, dass** die Umfangsfläche (56) des Klemmkörpers (22) mit einer strukturierten Oberfläche versehen ist.

4. Transportsicherung (10) gemäß Anspruch 2 oder 3, **dadurch gekennzeichnet, dass** die Umfangsfläche (56) des Klemmkörpers (22) mit einer Hartmetallbeschichtung versehen ist.

5. Transportsicherung (10) nach wenigstens einem der Ansprüche 2 bis 4, **dadurch gekennzeichnet, dass** die Umfangsfläche (56) des Klemmkörpers (22) mit einem reibungserhöhenden Material beschichtet ist, das in Verbindung mit einem Untergurt aus Stahl Reibbeiwerte größer als 0,25, bevorzugt größer als 0,3 besitzt.

6. Transportsicherung (10) nach Anspruch 5, **dadurch gekennzeichnet, dass** das reibungserhöhende Material aus einem Verbundwerkstoff besteht, der Oxide, wie Aluminium-, Silizium- und Manganoxide, mineralische Werkstoffe, Carbide oder Phosphide, Fasern aus aromatischen Polyamiden und/oder Kunstharz enthält.

7. Transportsicherung (10) nach wenigstens einem der Ansprüche 1 bis 6, **dadurch gekennzeichnet, dass** der exzentrische Klemmkörper (22) eine Umfangskontur besitzt, die sich in Umfangsrichtung aus stärker gekrümmten und weniger stark gekrümmten Umfangsabschnitten zusammensetzt.

8. Transportsicherung (10) nach wenigstens einem der Ansprüche 1 bis 7, **dadurch gekennzeichnet, dass** der exzentrische Klemmkörper (22) zwischen zwei Hakenteilen (26) angeordnet und nahe den feien Enden der Hakenteile drehbar in diesen gelagert ist.

9. Transportsicherung (10) nach wenigstens einem der Ansprüche 1 bis 8, **dadurch gekennzeichnet, dass** der exzentrische Klemmkörper (22) einen maximalen Durchmesser zwischen 4 cm und 7 cm besitzt.

10. Transportsicherung (10) nach wenigstens einem der Ansprüche 1 bis 9, **dadurch gekennzeichnet, dass** der exzentrische Klemmkörper (22) in Richtung seiner Rotationsachse eine Länge zwischen 3 cm und 10 cm hat.

11. Transportsicherung (10) nach wenigstens einem der Ansprüche 1 bis 10, **dadurch gekennzeichnet, dass** die Lagerung des exzentrischen Klemmkörpers (22) an dem wenigstens einen Hakenteil (26) sowie die Form und Masseverteilung des exzentrischen Klemmkörpers (22) derart sind, dass der exzentrische Klemmkörper (22) eine durch die Schwerkraft definierte Rotationsstellung einnimmt.

12. Transportsicherung (10) nach Anspruch 11, **dadurch gekennzeichnet, dass** der exzentrische Klemmkörper (22) in der verriegelnden Position der Verriegelungsklaue (24) eine von der durch die Schwerkraft definierten Rotationsstellung abweichende Rotationsstellung einnimmt.

13. Transportsicherung (10) nach Anspruch 12, **dadurch gekennzeichnet, dass** die Verriegelungsklaue (24) und die Kinematik (40) in Verbindung mit dem exzentrischen Klemmkörper (22) derart ausgebildet sind, dass sich die Rotationsstellung des exzentrischen Klemmkörpers (22) in der verriegelnden Position der die Verriegelungsklaue (24) verändert, wenn sich die Relativposition zwischen der Transportsicherung und einem von der Transportsicherung gehaltenem Behälter ändert.
